# EUROPÄISCHE PATENTANMELDUNG

(11) **EP 2 259 553 A1**
(43) Veröffentlichungstag der Anmeldung: **08.12.2010**
(21) Anmeldenummer: 10178038.5
(22) Anmeldetag: 05.10.2007
(51) Int. Cl.: H04L 29/12

(54) **Verfahren und Portal zum Herstellen einer Kommunikationsverbindung zwischen zwei unterschiedlichen Kommunikationsnetzen**

(30) Priorität: 10.10.2006 DE 102006047962
(62) Teilanmeldung aus: 07117959.2
(71) Anmelder: Vodafone Holding GmbH, 40213 Düsseldorf (DE)
(72) Erfinder: Lang, Thomas, 81667, München (DE); Haiges, Sven, 85622, Feldkirchen (DE); Barker, Ronald, 81379, München (DE)
(74) Vertreter: Müller & Schubert

(57) **Zusammenfassung**

Die Erfindung betrifft Verfahren sowie ein Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz.

## Beschreibung

Die vorliegende Erfindung betrifft ein Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz. Ferner betrifft die Erfindung ein Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz.

Ein Teilnehmer eines Kommunikationsnetzes ist ein Nutzer der mit Hilfe eines elektronischen Endgerätes Daten über eine Kommunikationsverbindung senden und/oder empfangen kann. Ein elektronisches Endgerät kann ein herkömmliches Telefon, ein Mobiltelefon, ein PDA (PDA = Persönlicher digitaler Assistent), ein Smartphone, ein tragbarer Kleincomputer, etc. sein.

Ein zu einem ersten Telekommunikationsnetz, insbesondere einem Mobilfunknetz, unterschiedliches Telekommunikationsnetz kann beispielsweise ein VOIP-Telekommunikationsnetz sein. Ein VOIP-Telekommunikationsnetz (VOIP = Voice over Internet Protocol) ist ein Computernetz über das telefoniert werden kann. In dem Computernetz werden für Telefonie typische Informationen, d.h. Sprache und Steuerinformationen für z.B. den Verbindungsaufbau, über ein einheitliches, auch für Datenübertragung nutzbares Netz übertragen. Die Teilnehmer können sowohl über Computer, über VoIP spezialisierte Telefonendgeräte, als auch über spezielle Adapter angeschlossene klassische Telefone eine Verbindung ins herkömmliche Telekommunikationsnetz herstellen.

VOIP-Anschlüsse verfügen über keine Telefonnummer, sondern über eine SIP-Adresse. D.h., ein Teilnehmer eines Computernetzes kann über die so genannte SIP-Adresse (SIP = Session Initiation Protocol) erreicht werden. Die SIP-Adresse ist ein Netzprotokoll zum Aufbau einer Kommunikationssitzung zwischen zwei und mehr Teilnehmern. Zur Schreibweise der SIP-Adressen wird das vom E-Mailing bekannte URI-Format (URI = Uniform Resource Identifier) benutzt: "user@domain". Eine typische SIP-Adresse lautet daher "user@anbieter.de". Ein Netzprotokoll ist dabei eine exakte Vereinbarung, nach der Daten zwischen Computern bzw. Prozessen ausgetauscht werden, die durch ein Computernetz miteinander verbunden sind.

Problematisch ist die Erreichbarkeit von Teilnehmern eines Computernetzes, insbesondere von VOIP-Teilnehmern, über elektronische Endgeräte wie ein Mobiltelefon, da die Eingabe der SIP-Adresse über einige elektronische Endgeräte, beispielsweise über die Tastatur eines Mobiltelefons, nur sehr umständlich möglich ist. Dies führt zur Nichterreichbarkeit von Teilnehmern eines Computernetzes, insbesondere von VOIP-Teilnehmern, beispielsweise aus einem Mobilfunknetz.

Die Aufgabe der Erfindung ist es, ein Verfahren und ein Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, zu schaffen, die eine einfache, sichere und kostengünstige Herstellung der
Kommunikationsverbindung zwischen den Teilnehmern der unterschiedlichen Kommunikationsnetze ermöglichen. Insbesondere soll ein Teilnehmer eines Telekommunikationsnetzes einen Teilnehmer in einem zum Telekommunikationsnetz unterschiedlichen Kommunikationsnetz einfach erreichen können.

Die vorliegende Aufgabe wird erfindungsgemäß durch ein Verfahren zum Herstellen einer Kommunikationsverbindung gemäß Patentanspruch 1, durch ein Verfahren zum Herstellen einer Kommunikationsverbindung gemäß Patentanspruch 2, durch ein Verfahren zum Herstellen einer Kommunikationsverbindung gemäß Patentanspruch 6 sowie durch ein Portal zum Herstellen einer Kommunikationsverbindung gemäß Patentanspruch 9 bzw. gemäß Patentanspruch 11 gelöst. Weitere Ausgestaltungen der Erfindung ergeben sich aus den abhängigen Patentansprüchen sowie der zugehörigen Beschreibung. Merkmale und Details, die im Zusammenhang mit dem erfindungsgemäßen Verfahren zum Herstellen einer Kommunikationsverbindung gemäß Patentanspruch 1 beschrieben sind, gelten dabei selbstverständlich, soweit anwendbar, auch im Zusammenhang mit dem Verfahren zum Herstellen einer Kommunikationsverbindung gemäß Patentanspruch 2, mit dem Verfahren zum Herstellen einer Kommunikationsverbindung gemäß Patentanspruch 6 sowie den erfindungsgemäßen Portalen zum Herstellen einer Kommunikationsverbindung gemäß Patentanspruch 9 oder 11 und jeweils umgekehrt.

Gemäß des ersten Aspektes der Erfindung wird die Ausgabe durch ein Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, gelöst, wobei ein Portal folgende Schritte durchführt:
a) ein dem Portal zugeordneter Applikationsrechner macht dem ersten Teilnehmer eine Adressliste mit Adressen zweiter Teilnehmer verfügbar, nachdem der erste Teilnehmer über ein ihm zugeordnetes Endgerät eine Verbindung zu dem Portal hergestellt hat, wobei die Adressen der zweiten Teilnehmer Adresskenndaten zur Einwahl in das zum Telekommunikationsnetz unterschiedliche zweite Kommunikationsnetz aufweisen;
b) der Applikationsrechner verknüpft Adresskenndaten solcher Adressen zweiter Teilnehmer mit einer bestimmten Einwahlkennung für die Anwahl eines dem Portal zugeordneten Media Gateways, die der erste Teilnehmer aus der ihm verfügbar gemachten Adressliste ausgewählt hat;
c) das Media Gateway interpretiert nach seiner Anwahl zumindest die einer Einwahlkennung zugeordneten Adresskenndaten und schaltet über die Adresskenndaten den ersten Teilnehmer mit dem wenigstens einen ausgewählten zweiten Teilnehmer zur Herstellung der Kommunikationsverbindung zusammen.

Durch ein derartiges Verfahren wird eine einfache, schnelle und kostengünstige Herstellung einer Kommunikationsverbindung zwischen den Teilnehmern der unterschiedlichen Kommunikationsnetze ermöglicht.

Das Portal stellt im Lichte der Erfindung eine Plattform in einem Kommunikationsnetz dar, das als Vermittler zwischen wenigstens zwei Teilnehmern unterschiedlicher Kommunikationsnetze, die miteinander kommunizieren wollen, dient. Das Portal kann beispielsweise ein Mobilfunkportal oder ein Internetportal bzw. eine Mischform aus Beidem sein.

Gemäß des ersten Schrittes des Verfahrens macht ein dem Portal zugeordneter Applikationsrechner dem ersten Teilnehmer eine Adressliste mit Adressen zweiter Teilnehmer verfügbar, nachdem der erste Teilnehmer über ein ihm zugeordnetes Endgerät eine Verbindung zu dem Portal hergestellt hat, wobei die Adressen der zweiten Teilnehmer Adresskenndaten zur Einwahl in das zum Telekommunikationsnetz unterschiedliche zweite Kommunikationsnetz aufweisen. Der Applikationsrechner kann dabei Teil des Portals sein oder das Portal kann auf einen separaten Applikationsrechner zugreifen. Nach der Herstellung der Verbindung über ein dem ersten Teilnehmer zugeordnetes elektronisches Endgerät, insbesondere ein Mobiltelefon, stellt das Portal dem ersten Teilnehmer eine Adressliste mit Adressen zweiter Teilnehmer zur Verfügung. Die zur Verfügung gestellten Adressen der zweiten Teilnehmer weisen dabei Adresskenndaten zur Einwahl in das zum Telekommunikationsnetz unterschiedliche Kommunikationsnetz, insbesondere in ein Computernetz, auf. Die Adresskenndaten können beispielsweise SIP-Adressen zum Erreichen von VoIP-Anschlüssen, d.h. von SIP-basierten Endgeräten, wie beispielsweise Computern, VoIP-spezialisierten Telefonendgeräten oder über spezielle Adapter angeschlossene klassische Telefone, sein. Der erste Teilnehmer kann über eine seinem Endgerät zugeordnete Anzeigeeinrichtung, beispielsweise das Display eines Mobiltelefons, die Adressliste mit Adressen der Teilnehmer des zum Telekommunikationsnetz unterschiedlichen Kommunikationsnetzes abrufen.

In einem zweiten Schritt verknüpft der Applikationsrechner Adresskenndaten solcher Adressen zweiter Teilnehmer mit einer bestimmten Einwahlkennung für die Anwahl eines dem Portal zugeordneten Media Gateways, die der erste Teilnehmer aus der ihm verfügbar gemachten Adressliste ausgewählt hat. D.h., nachdem der erste Teilnehmer Adressen zweiter Teilnehmer aus der ihm zur Verfügung gestellten Adressliste ausgewählt hat, verknüpft der Applikationsrechner die den Adressen zugeordneten Adresskenndaten der ausgewählten zweiten Teilnehmer mit einer bestimmten Einwahlkennung für die Anwahl eines dem Portal zugeordneten Media Gateways. Die Auswahl des ersten Teilnehmers wird dem Applikationsrechner mitgeteilt. Das Media Gateway erlaubt, dass unterschiedliche Kommunikationsnetzwerke, die auf völlig unterschiedlichen Protokollen basieren, miteinander kommunizieren können. Hierzu nimmt das Media Gateway eine Protokollumsetzung vor. Unter einem Media Gateway ist generell ein Rechner oder eine Schnittstelle zu verstehen, der/die Informationsdaten zwischen zwei verschiedenen Kommunikationsnetztypen vermittelt. Unter einer Einwahlkennung wird eine für das Telekommunikationsnetz typische Kennung verstanden. Über die Einwahlkennung wird eine Verbindung zu einem dem Telekommunikationsnetz zugeordneten Media Gateway hergestellt.

In einem letzten Schritt interpretiert das dem Portal zugeordnete Media Gateway nach seiner Anwahl zumindest die einer Einwahlkennung zugeordneten Adresskenndaten und schaltet über die Adresskenndaten den ersten Teilnehmer mit wenigstens einem ausgewählten zweiten Teilnehmer zur Herstellung der Kommunikationsverbindung zusammen. D.h., die mit der Einwahlkennung verknüpften Adresskenndaten erkennt das Media Gateway, so dass dieses aufgrund der Adresskenndaten eine Kommunikationsverbindung zwischen dem ersten Teilnehmer und dem wenigstens einen ausgewählten zweiten Teilnehmer, zu dessen Adresse die Adresskenndaten gehören, herstellt.

Die Adressen und Adresskenndaten zweiter Teilnehmer müssen dem Applikationsrechner vorliegen, damit dieser dem ersten Teilnehmer die Adressen der zweiten Teilnehmer in Form einer Adressliste verfügbar machen kann. Dabei kann die Adressliste, die dem Applikationsrechner vorliegt, von dem ersten Teilnehmer selbst eingerichtet worden sein oder der erste Teilnehmer kann auf Adresslisten zugreifen, die von anderen Teilnehmern in dem Applikationsrechner erzeugt wurden. Für den zweiten Fall kann vorgesehen sein, dass der erste Teilnehmer eine Zugangserlaubnis für das Abrufen einer Adressliste anderer Teilnehmer benötigt. Beispielsweise kann die Zugangserlaubnis über ein Passwort erteilt werden.

Durch dieses Verfahren können beispielsweise Teilnehmer eines Mobilfunknetzes über ihr Mobiltelefon auf eine einfache Art und Weise Personen telefonisch erreichen, denen ein für ein Computernetz ausgelegtes elektronisches Endgerät, insbesondere ein SIP-basiertes Telefongerät, zugeordnet ist. Der erste Teilnehmer muss nicht mehr umständlich über die Tastatur seines Mobiltelefons eine SIP-Adresse eines Teilnehmers eines Computernetzes eingeben. Die Eingabe einer SIP-Adresse über die Tastatur eines Mobiltelefons ist umständlich, da die Tastatur insbesondere nur für die einfache Eingabe von Zahlenfolgen ausgelegt ist. Die Eingabe von Sonderzeichen, die in Adresskenndaten für ein Computernetz vorkommen, ist beispielsweise mit einem Mobiltelefon umständlich.

Es ist ferner vorteilhaft bei diesem Verfahren, dass es einem Teilnehmer eines Telekommunikationsnetzes einfach ermöglicht wird eine Kommunikationsverbindung zu einer Mehrzahl von Adressen bzw. elektronischen Endgeräten zweiter Teilnehmer eines zum Telekommunikationsnetz unterschiedlichen zweiten Kommunikationsnetzes aufzubauen. Durch die Verfügbarmachung einer Adressliste kann der erste Teilnehmer mehrere Adressen aus der Adressliste gleichzeitig auswählen. Hierdurch kann beispielsweise einfach eine telefonische Konferenz aufgebaut werden. Ferner kann beispielsweise eine Textnachricht, wie eine E-Mail oder eine SMS, einfach an eine Vielzahl von Teilnehmern eines zum Telekommunikationsnetz unterschiedlichen zweiten Kommunikationsnetzes, insbesondere eines Computernetzes, gleichzeitig gesendet werden.

Gemäß des zweiten Aspektes der Erfindung wird die Ausgabe durch ein Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, gelöst, wobei ein Portal folgende Schritte durchführt:
a) ein dem Portal zugeordneter Applikationsrechner macht dem ersten Teilnehmer eine Adressliste mit Adressen zweiter Teilnehmer verfügbar, nachdem der erste Teilnehmer über ein ihm zugeordnetes Endgerät eine Verbindung zu dem Portal hergestellt hat, wobei die Adressen der zweiten Teilnehmer Adresskenndaten zur Einwahl in das zum Telekommunikationsnetz unterschiedliche zweite Kommunikationsnetz aufweisen;
b) der Applikationsrechner verknüpft die Adresskenndaten aller Adressen zweiter Teilnehmer mit einer bestimmten Einwahlkennung für die Anwahl eines dem Portal zugeordneten Media Gateways;
c) das Media Gateway interpretiert nach seiner Anwahl zumindest die einer Einwahlkennung zugeordneten Adresskenndaten und schaltet über die Adresskenndaten den ersten Teilnehmer mit wenigstens einem ausgewählten zweiten Teilnehmer zur Herstellung der Kommunikationsverbindung zusammen.

Das Portal dient auch hier als Vermittler zwischen wenigstens zwei Teilnehmern unterschiedlicher Kommunikationsnetze, die miteinander kommunizieren wollen. Das Portal ist eine Plattform in einem Kommunikationsnetz und kann beispielsweise ein Mobilfunkportal oder ein Internetportal bzw. eine Mischform aus Beidem sein.

Auch bei diesem Verfahren macht ein dem Portal zugeordneter Applikationsrechner dem ersten Teilnehmer eine Adressliste mit Adressen zweiter Teilnehmer verfügbar, nachdem der erste Teilnehmer über ein ihm zugeordnetes Endgerät eine Verbindung zu dem Portal hergestellt hat, wobei die Adressen der zweiten Teilnehmer Adresskenndaten zur Einwahl in das zum Telekommunikationsnetz unterschiedliche zweite Kommunikationsnetz aufweisen.

Im Unterschied zu dem ersten Aspekt der Erfindung verknüpft bei diesem Verfahren der Applikationsrechner die Adresskenndaten aller Adressen zweiter Teilnehmer mit einer bestimmten Einwahlkennung für die Anwahl eines dem Portal zugeordneten Media Gateways. D.h., der erste Teilnehmer wählt eine Adressliste aus, um eine Vielzahl von Teilnehmern eines anderen Kommunikationsnetzes zu erreichen. Das Media Gateway interpretiert nach seiner Anwahl zumindest die einer Einwahlkennung zugeordneten Adresskenndaten und schaltet über die Adresskenndaten den ersten Teilnehmer mit wenigstens einem ausgewählten zweiten Teilnehmer zur Herstellung der Kommunikationsverbindung zusammen.

Vorteilhaft bei diesem Verfahren ist, dass es einem Teilnehmer eines Telekommunikationsnetzes einfach ermöglicht wird eine Kommunikationsverbindung zu einer Mehrzahl von Adressen zweiter Teilnehmer eines zum Telekommunikationsnetz unterschiedlichen zweiten Kommunikationsnetzes aufzubauen. Dem ersten Teilnehmer können mehrere unterschiedliche Adresslisten verfügbar gemacht werden. Jede Adressliste enthält zumindest eine Adresse eines Teilnehmers eines zum Telekommunikationsnetz unterschiedlichen Kommunikationsnetzes. Dem ersten Teilnehmer wird hierdurch ermöglicht einfach und schnell eine Kommunikationsverbindung zu einer Gruppe von Teilnehmern eines anderen Kommunikationsnetzes aufzubauen. Der erste Teilnehmer kann sich hierzu verschiedene Adresslisten erzeugen, um immer eine bestimmte Gruppe von Teilnehmern eines zum Telekommunikationsnetz unterschiedlichen Kommunikationsnetzes, insbesondere eines Computernetzes, zu erreichen. Hierdurch kann beispielsweise einfach eine telefonische Konferenz zu einer bestimmten Gruppe von Teilnehmern aufgebaut werden. Ferner kann einfach eine Textnachricht, wie eine E-Mail oder eine SMS, an eine bestimmte Gruppe von Teilnehmern eines zum Telekommunikationsnetz unterschiedlichen zweiten Kommunikationsnetzes, insbesondere eines Computernetzes, gleichzeitig gesendet werden.

Die in dem ersten und insbesondere dem zweiten Anspruch angegebene Reihenfolge der Verfahrensschritte entspricht keinem vorgegebenen zeitlichen Ablauf. Einzelne Schritte können in unterschiedlicher Reihenfolge oder gleichzeitig ablaufen.

Bevorzugt ist ein Verfahren, bei dem der Applikationsrechner dem ersten Teilnehmer eine Adressliste mit Adressen zweiter Teilnehmer in Form einer Internetseite, insbesondere einer WAP-Seite, verfügbar macht, wobei jede Adresse in der Adressliste mit einem Link verknüpft ist. Unter einem Link wird generell ein Verweis zu den mit dem Link verknüpften Adressen in einer Adressliste bezeichnet.

Das Wireless Application Protocol (WAP) bezeichnet dabei eine Sammlung von Technologien und Protokollen, die Internetinhalte für die langsamere Übertragungsrate und die längeren Antwortzeiten in einem Telekommunikationsnetz, insbesondere dem Mobilfunknetz, sowie für die kleinen Displays der elektronischen Endgeräte, wie einem Mobiltelefone, verfügbar zu machen.

Dadurch, dass jede Adresse in der Adressliste mit den Adresskenndaten verknüpft ist, erkennt das dem Applikationsrechner zugeordnete Media Gateway, nach Auswahl einer Adresse durch den ersten Telnehmer des Telekommunikationsnetzes, die Adresskenndaten des ausgewählten zweiten Teilnehmers. Der Teilnehmer des Telekommunikationsnetzes kann per WAP Adresslisten abrufen und durch ein Anklicken im WAP-Browser wird eine dynamisch erzeugte Nummer ins Portal gewählt. Das dem Portal zugeordnete Media Gateway leitet den Anruf zu dem zumindest einen zweiten Teilnehmer des zum Telekommunikationsnetz unterschiedlichen Kommunikationsnetzes weiter.

Die Anzeige der Internetseite erfolgt auf dem Endgerät des ersten Teilnehmers und das Navigieren durch die Internetseite erfolgt mittels eines Browsers.

Ferner ist ein Verfahren vorteilhaft, bei dem der Applikationsrechner dem ersten Teilnehmer eine Adressliste mit Adressen zweiter Teilnehmer in Form einer JAVA-Applikation verfügbar macht und dass die Adressliste vom Applikationsrechner auf ein Endgerät des ersten Teilnehmers übertragen wird. Der Teilnehmer des Telekommunikationsnetzes wählt die Adresse in einer JAVA-Applikation aus. Per Telefon-Interface wird die Adresse des zweiten Teilnehmers dem elektronischen Endgerät des ersten Teilnehmers weitergeleitet, der dann wiederum durch Auswahl der Nummer eine bestimmte Einwahlkennung zugeordnet wird. Durch die Verknüpfung der Einwahlkennung erkennt das Media Gateway die der Adresse zugeordnete Adresskennung des zweiten Teilnehmers und schaltet den ersten und den zweiten Teilnehmer zusammen. Die Adressliste mit Adressen zweiter Teilnehmer bzw. die JAVA-Applikation kann von dem ersten Teilnehmer von dem Portal bzw. dem Applikationsrechner auf das elektronische Endgerät des ersten Teilnehmers herunter geladen werden.

Die Adresskenndaten zumindest einzelner Adressen können mit einer statischen Einwahlkennung verknüpft werden. Falls die Einwahlkennung über ein bekanntes Portal erfolgt, ist es möglich eine feste statische Einwahlkennung zu benutzen. Das heißt, wenn der Applikationsrechner des Portals immer unter derselben Adresse erreichbar sein muss, ist eine statische Einwahlkennung sinnvoll.

Bevorzugt wird jedoch ein Verfahren, bei dem Adresskenndaten zumindest einzelner Adressen mit einer dynamischen Einwahlkennung verknüpft werden. So ist es bei einem Internetzugang über ein Portal eines Internet-Service-Providers üblich Einwahlkennungen, insbesondere IP-Adressen, zu teilen. D.h., bei der Einwahl ins Internet über ein Portal eines Internet-Service-Providers wird dem elektronischen Endgerät, insbesondere dem Mobiltelefon, automatisch eine freie Einwahlkennung temporär zugeordnet. Nach dem Beenden der Verbindung ist die Einwahlkennung wieder verfügbar und wird einer anderen Verbindung zugeordnet. Eine dynamische Einwahlkennung ist flexibel und anpassungsfähig. Bei jeder Einwahl in das Portal, d.h. in den Applikationsrechner des Portals, wird dem elektronischen Endgerät des ersten Teilnehmers des Telekommunikationsnetzes eine andere nicht benutzte Einwahlkennung zugewiesen. Nach Beendigung der Kommunikationsverbindung zwischen dem Teilnehmer des Telekommunikationsnetzes und dem Teilnehmer des zum Telekommunikationsnetz unterschiedlichen Kommunikationsnetzes steht die Einwahlkennung wieder für eine neue Kommunikationsverbindung zur Verfügung und kann einem anderen elektronischen Endgerät zugewiesen werden. Eine dynamische Einwahlkennung wird insbesondere von einem Portal vergeben, bei dem der erste Teilnehmer nur einen einfachen Zugang zum Internet gewählt hat, d.h. ein Einwahl ohne eine vorherige Anmeldung beim Portal haben möchte.

Ferner ist ein Verfahren vorteilhaft, bei dem der Applikationsrechner dem ersten Teilnehmer eine Adressliste mit Adressen zweiter Teilnehmer verfügbar macht, nachdem dieser über ein Authentifizierungsverfahren im Applikationsrechner authentifiziert worden ist. Hierdurch wird gewährleistet, dass der erste Teilnehmer nicht jede Adressliste erhält, sondern entweder nur die von ihm selbst erzeugte Adressliste von Teilnehmern eines zum Telekommunikationsnetz unterschiedlichen Kommunikationsnetzes, oder nur eine Adressliste eines anderen Teilnehmers eines zum Telekommunikationsnetz unterschiedlichen Kommunikationsnetzes, wenn er die Erlaubnis des anderen Teilnehmers erhalten hat. Zum Durchführen des Authentifizierungsverfahrens ist dem Applikationsrechner des Portals eine Authentifizierungseinrichtung zugeordnet. Das Authentifizierungsverfahren kann vom Portal insbesondere auch dazu genutzt werden, um festzustellen, dass der erste Teilnehmer generell zur Nutzung des Dienstes des Portals berechtigt ist.

Die Aufgabe wird gemäß eines dritten Aspektes der Erfindung durch ein Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, gelöst, wobei ein Portal folgende Schritte durchführt:
a) das Portal empfängt eine bestimmte Telefonnummer, bei der ein erster Bestandteil eine bestimmte Einwahlkennung für die Anwahl eines dem Portal zugeordneten Media Gateways aufweist, und bei der ein zweiter Bestandteil Nutzerdaten des zweiten Teilnehmers des zweiten Kommunikationsnetzes, zu dem der erste Teilnehmer eine Kommunikationsverbindung herstellen will, aufweist;
b) das Media Gateway des Portals interpretiert nach seiner Anwahl über die Einwahlkennung der bestimmten Telefonnummer die der bestimmten Telefonnummer zugeordneten Nutzerdaten des zweiten Teilnehmers und schaltet über die Nutzerdaten den ersten Teilnehmer mit dem zweiten Teilnehmer zur Herstellung der Kommunikationsverbindung zusammen.

Das Media Gateway des Portals interpretiert nach seiner Anwahl über die Einwahlkennung der bestimmten Telefonnummer die der bestimmten Telefonnummer zugeordneten Nutzerdaten des zweiten Teilnehmers und schaltet über die interpretierten Nutzerdaten den ersten Teilnehmer mit dem zweiten Teilnehmer zur Herstellung der Kommunikationsverbindung zusammen. Bei diesem Verfahren gibt das Portal dem ersten Teilnehmer keine Adressliste mit Adressen zweiter Teilnehmer vor, sondern empfängt eine bestimmte Telefonnummer, die sowohl die Einwahlkennung für das Media Gateway, als auch die Nutzerdaten zumindest eines zweiten Teilnehmers eines anderen Kommunikationsnetzes aufweist. Das Media Gateway erkennt anhand der Nutzerdaten, welcher zweite Teilnehmer vom ersten Teilnehmer angerufen werden möchte und schaltet über die den Nutzerdaten zugehörigen kennzeichnenden Datenbestandteile die Teilnehmer zusammen. Die Nutzerdaten können beispielsweise so genannte Vanity-Rufnummern sein, die mit Hilfe der Buchstabenwahl auf der Tastatur des elektronischen Endgeräts als Wort eingeben werden. D.h., es werden lediglich Buchstaben den Ziffern auf der Telefontastatur zugeordnet. So kann eine Rufnummer anstelle der Zahlenfolge als ein Begriff, beispielsweise als Name, eingegeben werden.

Bevorzugt ist hierbei ein Verfahren, bei dem das Portal eine bestimmte Telefonnummer empfängt, bei der die Nutzerdaten des zweiten Teilnehmers mit Adresskenndaten des zweiten Teilnehmers verknüpft sind, und bei dem das Media Gateway nach seiner Anwahl die mit den Nutzerdaten verknüpften Adresskenndaten des zweiten Teilnehmers interpretiert. Die Adresskenndaten, wie beispielsweise eine SIP-Adresse, sind den Nutzerdaten bereits zugeordnet. Diese mit den Nutzerdaten verknüpften Adresskenndaten werden von dem Media-Gateway erkannt und zur Herstellung einer Kommunikationsverbindung genutzt. Die Adresskenndaten können dabei durch ein Applikation in dem elektronischen Endgerät des Teilnehmers des Telekommunikationsnetzes den Nutzerdaten hinzugefügt bzw. angehängt worden sein. Hierzu muss der Applikation des elektronischen Endgerätes bekannt sein, welche Adresskenndaten welchen Nutzerdaten zugeordnet sind. D.h., gibt der erste Teilnehmer als Nutzerdaten den Spitznamen des zweiten Teilnehmers ein, verknüpft die Applikation des elektronischen Endgerätes den Spitznamen mit den im elektronischen Endgerät hinterlegten Adresskenndaten, beispielsweise der SIP-Adresse.

Alternativ dazu ist ein Verfahren bevorzugt, bei dem die Nutzerdaten eines zweiten Teilnehmers der vom Portal empfangenen bestimmten Telefonnummer in einem Applikationsrechner des Portals mit Adresskenndaten des zweiten Teilnehmers verknüpft werden und dass das Media Gateway nach seiner Anwahl die mit den Nutzerdaten verknüpften Adresskenndaten des zweiten Teilnehmers interpretiert. In diesem Fall hängt nicht das elektronische Endgerät des ersten Teilnehmers die Adresskenndaten den Nutzerdaten an, sondern erst der Applikationsrechner des Portals. D.h., die Verknüpfung der Adresskenndaten erfolgt nicht bereits im elektronischen Endgerät des ersten Teilnehmers, sondern erst im Applikationsrechner des Portals. Dem Portal bzw. dem Applikationsrechner müssen in diesem Fall die Adresskenndaten der Nutzerdaten bekannt sein. Das Portal bzw. der Applikationsrechner wandelt die empfangenen Nutzerdaten in Adresskenndaten um. Wird neben der Einwahlkennung für das Gateway als Nutzerdaten ein bestimmter Name eingegeben, so interpretiert das Media Gateway bzw. der Applikationsrechner den bestimmten Namen und verknüpft den Namen beispielsweise mit einer hinterlegten SIP-Adresse, um die Kommunikationsverbindung herzustellen.

Da in der Regel die Nutzung eines Dienstes eines Portals kostenpflichtig ist, ist ein Verfahren bevorzugt, bei dem in einem vorgelagerten Registrierungsschritt im Portal der erste Teilnehmer zur Durchführung des Verfahrens registriert wird. Erst nach der Registrierung kann der erste Teilnehmer Adresslisten erzeugen und speichern bzw. auf gespeicherte Adresslisten anderer zweiter Teilnehmer zugreifen.

Die Aufgabe wird gemäß eines vierten Aspektes der Erfindung durch ein Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, gelöst, wobei das Portal einen Applikationsrechner zum Verfügbarmachen einer Adressliste mit Adressen zweiter Teilnehmer für den ersten Teilnehmer, wobei die Adressen der zweiten Teilnehmer Adresskenndaten zur Einwahl in das zum Telekommunikationsnetz unterschiedliche zweite Kommunikationsnetz aufweisen, eine Schnittstelle zur Verbindung mit einem dem ersten Teilnehmer zugeordneten Endgerät, Mittel zur Verknüpfung von Adresskenndaten von Adressen zweiter Teilnehmer mit einer bestimmten Einwahlkennung für die Anwahl eines dem Portal zugeordneten Media Gateways, und ein Media Gateway mit Mitteln zum Interpretieren von einer Einwahlkennung zugeordneten Adresskenndaten sowie mit Mitteln zum Zusammenschalten des ersten Teilnehmers mit dem wenigstens einen ausgewählten zweiten Teilnehmer über die Adresskenndaten aufweist.

Durch ein derartiges Portal wird eine einfache, schnelle und kostengünstige Herstellung einer Kommunikationsverbindung zwischen den Teilnehmern der unterschiedlichen Telekommunikationsnetze ermöglicht.

Das Portal weist einen Applikationsrechner zum Verfügbarmachen einer Adressliste mit Adressen zweiter Teilnehmer für den ersten Teilnehmer auf, wobei die Adressen der zweiten Teilnehmer Adresskenndaten zur Einwahl in das zum Telekommunikationsnetz unterschiedliche zweite Kommunikationsnetz aufweisen. Der Applikationsrechner speichert vorteilhafterweise die Adressen zweiter Teilnehmer eines zum Telekommunikationsnetz unterschiedlichen Kommunikationsnetzes. Hierbei kann der Applikationsrechner mehrere Adressen in Adresslisten zusammenfügen.

Ferner weist das Portal eine Schnittstelle zur Verbindung mit einem dem ersten Teilnehmer zugeordneten Endgerät auf. D.h., über die Schnittstelle wird die Kommunikationsverbindung zwischen den Teilnehmern unterschiedlicher Kommunikationsnetze aufgebaut.

Das Portal weist ferner Mittel zur Verknüpfung von Adresskenndaten von Adressen zweiter Teilnehmer mit einer bestimmten Einwahlkennung für die Anwahl eines dem Portal zugeordneten Media Gateways auf. D.h., der statischen oder dynamischen Einwahlkennung werden Adresskenndaten zugeordnet, die ein Media Gateway interpretiert und zum Zusammenschalten des ersten Teilnehmers mit dem wenigstens einen ausgewählten zweiten Teilnehmer nutzt. Das heißt, dass Media Gateway weist Mitteln zum Interpretieren von Adresskenndaten sowie Mitteln zum Zusammenschalten des ersten Teilnehmers mit dem wenigstens einen ausgewählten zweiten Teilnehmer über die Adresskenndaten auf.

Ferner ist ein Portal vorteilhaft, bei dem der Applikationsrechner zum Verfügbarmachen einer Adressliste mit Adressen zweiter Teilnehmer in Form einer Internetseite, insbesondere einer WAP-Seite, und/oder in Form einer JAVA-Applikation ausgebildet ist. Hierdurch kann dem ersten Teilnehmer eine Adressliste zweiter Teilnehmer schnell und übersichtlich angezeigt werden. so dass die Auswahl eines oder mehrere zweiter Teilnehmer für den ersten Teilnehmer erleichtert wird. Durch die Verfügbarmachung einer derartigen Adressliste kann der zweite Teilnehmer durch Anklicken einer Adresse diese einfach auswählen. Die Adressen werden hierzu verlinkt.

Ein Portal, welches eine Einrichtung zum Authentifizieren des ersten Teilnehmers aufweist, ermöglicht dem Betreiber des Portals den Dienst kostenpflichtig anzubieten. Der Nutzer des Portals, d.h. der erste Teilnehmer, muss in einem vorgelagerten Registrierungsschritt zur Durchführung des Verfahrens registriert werden. Erst nach der Registrierung kann der erste Teilnehmer Adresslisten erzeugen und speichern bzw. auf gespeicherte Adresslisten anderer zweiter Teilnehmer zugreifen.

Ferner ist ein Verfahren vorteilhaft, bei dem der Applikationsrechner dem ersten Teilnehmer eine Adressliste mit Adressen zweiter Teilnehmer verfügbar macht, nachdem dieser über ein Authentifizierungsverfahren im Applikationsrechner authentifiziert worden ist.

Durch die Einrichtung zum Authentifizieren wird gewährleistet, dass der erste Teilnehmer nicht jede im Portal hinterlegte Adressliste abrufen kann, sondern entweder nur die von ihm selbst erzeugte Adressliste von Teilnehmern eines zum Telekommunikationsnetz unterschiedlichen Kommunikationsnetzes oder nur eine Adressliste eines anderen Teilnehmers eines zum Telekommunikationsnetz unterschiedlichen Kommunikationsnetzes, wenn er die Erlaubnis des anderen Teilnehmers erhalten hat.

Gemäß eines letzten Aspektes der Erfindung wird die Erfindung durch ein Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, gelöst, wobei das Portal eine Schnittstelle zum Empfangen einer bestimmten Telefonnummer, bei der ein erster Bestandteil eine bestimmte Einwahlkennung für die Anwahl eines dem Portal zugeordneten Media Gateways aufweist, und bei der ein zweiter Bestandteil Nutzerdaten des zweiten Teilnehmers des zweiten Kommunikationsnetzes, zu dem der erste Teilnehmer eine Kommunikationsverbindung herstellen will, aufweist, und ein Media Gateway mit Mitteln zum Interpretieren der nach seiner Anwahl über die Einwahlkennung der bestimmten Telefonnummer der bestimmten Telefonnummer zugeordneten Nutzerdaten des zweiten Teilnehmers und mit Mitteln zum Zusammenschalten des ersten Teilnehmers mit dem wenigstens einen ausgewählten zweiten Teilnehmer über die Nutzerdaten aufweist. Den Nutzerdaten sind hierbei die Adresskenndaten der zweiten Teilnehmer zugeordnet.

Das Portal empfängt über die Schnittstelle die bestimmte Telefonnummer. Über die Mittel zum Interpretieren interpretiert das Media Gateway des Portals nach seiner Anwahl über die Einwahlkennung die der bestimmten Telefonnummer zugeordneten Nutzerdaten des zweiten Teilnehmers und schaltet über die Mittel zum Zusammenschalten den ersten Teilnehmer mit dem zweiten Teilnehmer zur Herstellung der Kommunikationsverbindung zusammen. Hierbei sind die Adresskenndaten bereits im elektronischen Endgerät des ersten Teilnehmers den Nutzerdaten zugeordnet worden.

Das Portal gibt dem ersten Teilnehmer keine Adressliste mit Adressen zweiter Teilnehmer vor, sondern empfängt über die Schnittstelle eine bestimmte Telefonnummer, die sowohl die Einwahlkennung für das Media Gateway, als auch die Nutzerdaten zumindest eines zweiten Teilnehmers eines anderen Kommunikationsnetzes aufweist. Die Mittel zum Interpretieren des Media Gateways erkennen anhand der Nutzerdaten, welcher zweite Teilnehmer vom ersten Teilnehmer angerufen werden möchte und schaltet über die Mittel zum Zusammenschalten die Teilnehmer zusammen. Die Nutzerdaten können beispielsweise so genannte Vanity-Rufnummern sein, die mit Hilfe der Buchstabenwahl auf der Tastatur des elektronischen Endgeräts als Wort eingeben werden. D.h., es werden lediglich Buchstaben den Ziffern auf der Telefontastatur zugeordnet. So kann eine Rufnummer anstelle der Zahlenfolge als ein Begriff, beispielsweise als Name, eingegeben werden. Bevorzugt sind die Interpretationsmittel zum Interpretieren von Adresskenndaten des zweiten Teilnehmers ausgebildet, die mit den Nutzerdaten des zweiten Teilnehmers verknüpft sind und die an das Portal übertragen worden sind.

Des Weiteren ist ein Portal vorteilhaft, bei dem ein Applikationsrechner zum Verknüpfen von Nutzerdaten eines zweiten Teilnehmers der vom Portal empfangenen bestimmten Telefonnummer mit Adresskenndaten des zweiten Teilnehmers vorgesehen ist und dass die Interpretationsmittel zum Interpretieren der mit den Nutzerdaten verknüpften Adresskenndaten des zweiten Teilnehmers ausgebildet sind. Hierbei sind die Adresskenndaten nicht bereits im elektronischen Endgerät des ersten Teilnehmers den Nutzerdaten zugeordnet worden, sondern werden erst in dem Applikationsrechner mit den Nutzerdaten, die der Applikationsrechner von dem elektronischen Endgerät des ersten Teilnehmers empfängt, verknüpft. In beiden zuvor beschriebenen Varianten des Zuordnens der Adresskenndaten zu den Nutzerdaten erfolgt die Interpretation der Adresskenndaten durch das Media Gateway.

Das Portal kann ferner eine Einrichtung zum Registrieren des ersten Teilnehmers vor der Herstellung einer Kommunikationsverbindung aufweist.

## Patentansprüche

1. Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, **gekennzeichnet durch** folgende, von einem Portal durchgeführte Schritte:
a) ein dem Portal zugeordneter Applikationsrechner macht dem ersten Teilnehmer eine Adressliste mit Adressen zweiter Teilnehmer verfügbar, nachdem der erste Teilnehmer über ein ihm zugeordnetes Endgerät eine Verbindung zu dem Portal hergestellt hat, wobei die Adressen der zweiten Teilnehmer Adresskenndaten zur Einwahl in das zum Telekommunikationsnetz unterschiedliche zweite Kommunikationsnetz aufweisen;
b) der Applikationsrechner verknüpft Adresskenndaten solcher Adressen zweiter Teilnehmer mit einer bestimmten Einwahlkennung für die Anwahl eines dem Portal zugeordneten Media Gateways, die der erste Teilnehmer aus der ihm verfügbar gemachten Adressliste ausgewählt hat;
c) das Media Gateway interpretiert nach seiner Anwahl zumindest die einer Einwahlkennung zugeordneten Adresskenndaten und schaltet über die Adresskenndaten den ersten Teilnehmer mit dem wenigstens einen ausgewählten zweiten Teilnehmer zur Herstellung der Kommunikationsverbindung zusammen.

2. Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, **gekennzeichnet durch** folgende, von einem Portal durchgeführte Schritte:
a) ein dem Portal zugeordneter Applikationsrechner macht dem ersten Teilnehmer eine Adressliste mit Adressen zweiter Teilnehmer verfügbar, nachdem der erste Teilnehmer über ein ihm zugeordnetes Endgerät eine Verbindung zu dem Portal hergestellt hat, wobei die Adressen der zweiten Teilnehmer Adresskenndaten zur Einwahl in das zum Telekommunikationsnetz unterschiedliche zweite Kommunikationsnetz aufweisen;
b) der Applikationsrechner verknüpft die Adresskenndaten aller Adressen zweiter Teilnehmer mit einer bestimmten Einwahlkennung für die Anwahl eines dem Portal zugeordneten Media Gateways;
c) das Media Gateway interpretiert nach seiner Anwahl zumindest die einer Einwahlkennung zugeordneten Adresskenndaten und schaltet über die Adresskenndaten den ersten Teilnehmer mit wenigstens einem ausgewählten zweiten Teilnehmer zur Herstellung der Kommunikationsverbindung zusammen.

3. Verfahren nach Anspruch 1 oder 2, **dadurch gekennzeichnet, dass** der Applikationsrechner dem ersten Teilnehmer eine Adressliste mit Adressen zweiter Teilnehmer in Form einer Internetseite, insbesondere einer WAP-Seite, verfügbar macht, wobei jede Adresse in der Adressliste mit einem Link verknüpft ist, oder dass der Applikationsrechner dem ersten Teilnehmer eine Adressliste mit Adressen zweiter Teilnehmer in Form einer JAVA-Applikation verfügbar macht und dass die Adressliste vom Applikationsrechner auf ein Endgerät des ersten Teilnehmers übertragen wird.

4. Verfahren nach einem der Ansprüche 1 bis 3, **dadurch gekennzeichnet, dass** Adresskenndaten zumindest einzelner Adressen mit einer statischen Einwahlkennung oder mit einer dynamischen Einwahlkennung verknüpft werden.

5. Verfahren nach einem der Ansprüche 1 bis 4, **dadurch gekennzeichnet, dass** der Applikationsrechner dem ersten Teilnehmer eine Adressliste mit Adressen zweiter Teilnehmer verfügbar macht, nachdem dieser über ein Authentifizierungsverfahren im Applikationsrechner authentifiziert worden ist.

6. Verfahren zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, **gekennzeichnet durch** folgende, von einem Portal durchgeführte Schritte:
a) das Portal empfängt eine bestimmte Telefonnummer, bei der ein erster Bestandteil eine bestimmte Einwahlkennung für die Anwahl eines dem Portal zugeordneten Media Gateways aufweist, und bei der ein zweiter Bestandteil Nutzerdaten des zweiten Teilnehmers des zweiten Kommunikationsnetzes, zu dem der erste Teilnehmer eine Kommunikationsverbindung herstellen will, aufweist;
b) das Media Gateway des Portals interpretiert nach seiner Anwahl über die Einwahlkennung der bestimmten Telefonnummer die der bestimmten Telefonnummer zugeordneten Nutzerdaten des zweiten Teilnehmers und schaltet über die Nutzerdaten den ersten Teilnehmer mit dem zweiten Teilnehmer zur Herstellung der Kommunikationsverbindung zusammen.

7. Verfahren nach Anspruch 6, **dadurch gekennzeichnet, dass** das Portal eine bestimmte Telefonnummer empfängt, bei der die Nutzerdaten des zweiten Teilnehmers mit Adresskenndaten des zweiten Teilnehmers verknüpft sind und dass das Media Gateway nach seiner Anwahl die mit den Nutzerdaten verknüpften Adresskenndaten des zweiten Teilnehmers interpretiert.

8. Verfahren nach Anspruch 7, **dadurch gekennzeichnet, dass** die Nutzerdaten eines zweiten Teilnehmers der vom Portal empfangenen bestimmten Telefonnummer in einem Applikationsrechner des Portals mit Adresskenndaten des zweiten Teilnehmers verknüpft werden und dass das Media Gateway nach seiner Anwahl die mit den Nutzerdaten verknüpften Adresskenndaten des zweiten Teilnehmers interpretiert.

9. Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, **gekennzeichnet durch** einen Applikationsrechner zum Verfügbarmachen einer Adressliste mit Adressen zweiter Teilnehmer für den ersten Teilnehmer, wobei die Adressen der zweiten Teilnehmer Adresskenndaten zur Einwahl in das zum Telekommunikationsnetz unterschiedliche zweite Kommunikationsnetz aufweisen, eine Schnittstelle zur Verbindung mit einem dem ersten Teilnehmer zugeordneten Endgerät, Mittel zur Verknüpfung von Adresskenndaten von Adressen zweiter Teilnehmer mit einer bestimmten Einwahlkennung für die Anwahl eines dem Portal zugeordneten Media Gateways, und mit einem Media Gateway mit Mitteln zum Interpretieren von einer Einwahlkennung zugeordneten Adresskenndaten und mit Mitteln zum Zusammenschalten des ersten Teilnehmers mit dem wenigstens einen ausgewählten zweiten Teilnehmer über die Adresskenndaten.

10. Portal nach Anspruch 9, **dadurch gekennzeichnet, dass** der Applikationsrechner zum Verfügbarmachen einer Adressliste mit Adressen zweiter Teilnehmer in Form einer Internetseite, insbesondere einer WAP-Seite, und/oder in Form einer JAVA-Applikation ausgebildet ist.

11. Portal zum Herstellen einer Kommunikationsverbindung zwischen einem ersten Teilnehmer in einem Telekommunikationsnetz, insbesondere einem Mobilfunknetz, und wenigstens einem zweiten Teilnehmer in einem zum Telekommunikationsnetz unterschiedlichen zweiten Kommunikationsnetz, insbesondere einem Computernetz, **gekennzeichnet durch** eine Schnittstelle zum Empfangen einer bestimmten Telefonnummer, bei der ein erster Bestandteil eine bestimmte Einwahlkennung für die Anwahl eines dem Portal zugeordneten Media Gateways aufweist, und bei der ein zweiter Bestandteil Nutzerdaten des zweiten Teilnehmers des zweiten Kommunikationsnetzes, zu dem der erste Teilnehmer eine Kommunikationsverbindung herstellen will, aufweist, und ein Media Gateway mit Mitteln zum Interpretieren der nach seiner Anwahl über die Einwahlkennung der bestimmten Telefonnummer der bestimmten Telefonnummer zugeordneten Nutzerdaten des zweiten Teilnehmers und mit Mitteln zum Zusammenschalten des ersten Teilnehmers mit dem wenigstens einen ausgewählten zweiten Teilnehmer über die Nutzerdaten.

12. Portal nach Anspruch 11, **dadurch gekennzeichnet, dass** ein Applikationsrechner zum Verknüpfen von Nutzerdaten eines zweiten Teilnehmers der vom Portal empfangenen bestimmten Telefonnummer mit Adresskenndaten des zweiten Teilnehmers vorgesehen ist und dass die Interpretationsmittel zum Interpretieren der mit den Nutzerdaten verknüpften Adresskenndaten des zweiten Teilnehmers ausgebildet sind.
